# EUROPÄISCHE PATENTSCHRIFT

(11) **EP 3 330 557 B1**
(45) Veröffentlichungstag und Bekanntmachung des Hinweises auf die Patenterteilung: **05.06.2019**
(21) Anmeldenummer: 17200393.1
(22) Anmeldetag: 07.11.2017
(51) Int. Cl.: F16C 33/78, F16C 33/80, F16C 41/00, B60B 27/02

(54) **RADLAGERANORDNUNG FÜR EIN KRAFTFAHRZEUG**
WHEEL BEARING ASSEMBLY FOR A MOTOR VEHICLE
SYSTÈME DE ROULEMENT DE ROUE POUR UN VÉHICULE AUTOMOBILE

(30) Priorität: 01.12.2016 DE 102016223910
(43) Veröffentlichungstag der Anmeldung: 06.06.2018
(73) Patentinhaber: AUDI AG, 85045 Ingolstadt (DE)
(72) Erfinder: Albl, Johannes, 85055 Ingolstadt (DE); Frisch, Michael, 94513 Schönberg (DE)

(56) Entgegenhaltungen:
- DE-A1-102004 044 118
- DE-A1-102015 122 519
- DE-B3-102015 002 965
- JP-A- 2002 327 769
- JP-A- 2015 137 754
- JP-A- 2016 017 579
- US-A1- 2013 069 332

## Beschreibung

Die Erfindung betrifft eine Radlageranordnung für ein Kraftfahrzeug gemäß der im Oberbegriff des Patentanspruches 1 angegebenen Art.

Radlageranordnungen für ein Kraftfahrzeug mit einem rotierenden, signalgebenden Encoder und einem mit dem Encoder zusammenwirkenden, feststehenden Drehzahlsensor zur Messung der Rotationsgeschwindigkeit bzw. des Drehwinkels des gelagerten Rades sind aus dem Stand der Technik hinreichend bekannt. Lediglich beispielhaft wird auf die DE 10 2012 216 598 A1 und die WO 2013/120541 A1 verwiesen.

Eine gattungsgemäße, sämtliche Merkmale des Oberbegriffes des Patentanspruches 1 aufweisende Radlageranordnung für ein Kraftfahrzeug ist aus der JP 2015-137754 A sowie der DE 10 2015 002 965 B3 bekannt.

Der Erfindung liegt die Aufgabe zugrunde, eine Radlageranordnung für ein Kraftfahrzeug gemäß der im Oberbegriff des Patentanspruches 1 angegebenen Art derart weiterzubilden, dass ein im Radträger angeordnetes, eine Radnabe in Bezug zum Radträger drehbar lagerndes Wälzlager vor Wasser- und Schmutzeintrag besser geschützt ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst die Radlageranordnung für ein Kraftfahrzeug ein in einem Radträger angeordnetes Wälzlager, über das eine Radnabe in Bezug zum Radträger drehbar gelagert ist.

Erfindungsgemäß weist der Radträger axial gegenüberliegend zum Wälzlager einen in Form einer in den Radträger eingebrachten Nut ausgebildeter umlaufender axialer Spalt auf und am rotierenden Lagerring des Wälzlagers ist ein Fortsatz angeordnet bzw. ausgebildet, der sich in den im Radträger ausgebildeten Spalt hinein erstreckt.

Die erfindungsgemäße Ausgestaltung erweist sich als besonders vorteilhaft, da nunmehr durch den Fortsatz in Kombination mit dem Spalt ein Labyrinth gebildet ist, welches in Bezug zum Wälzlager die Funktion einer Vordichtung übernimmt und damit den Wasser- und Schmutzeintrag zum Wälzlager erschwert, so dass das Wälzlager vor Wasser- und Schmutzeintrag besser geschützt ist. Aufgrund der Ausbildung des Spaltes in Form einer Nut ist in vorteilhafter Weise eine einfache und schnelle Herstellung des Spaltes ermöglicht.

Gemäß einer besonders bevorzugten Ausführungsform der Erfindung umfasst die Radlageranordnung ferner einen feststehenden Drehzahlsensor und einen mit dem Drehzahlsensor zusammenwirkenden, signalgebenden Encoder, der dem Drehzahlsensor gegenüberliegend angeordnet ist. Hierbei ist der Drehzahlsensor derart ausgebildet und angeordnet, dass eine Stirnfläche in den Spalt hineinreicht, d.h. die in den Spalt hineinreichende Stirnfläche des Encoders bildet in diesem Bereich den Spaltgrund, und zudem ist der Encoder an dem in den Spalt hineinreichenden Fortsatz angeordnet. Diese Ausführungsform erweist sich als besonders vorteilhaft, da nunmehr neben der durch den Fortsatz in Kombination mit dem Spalt gebildeten Vordichtung und dem damit verbundenen verbesserten Schutz des Wälzlagers vor Wasser- und Schmutzeintrag insbesondere auch eine geschützte Anordnung des Drehzahlsensors und des Encoders gewährleistet ist.
- Fig. 1: eine schematische, geschnittene Teilansicht einer erfindungsgemäßen Radlageranordnung, und
- Fig. 2: die Radlagerung aus Fig. 1 in einer anderen Schnittdarstellung.

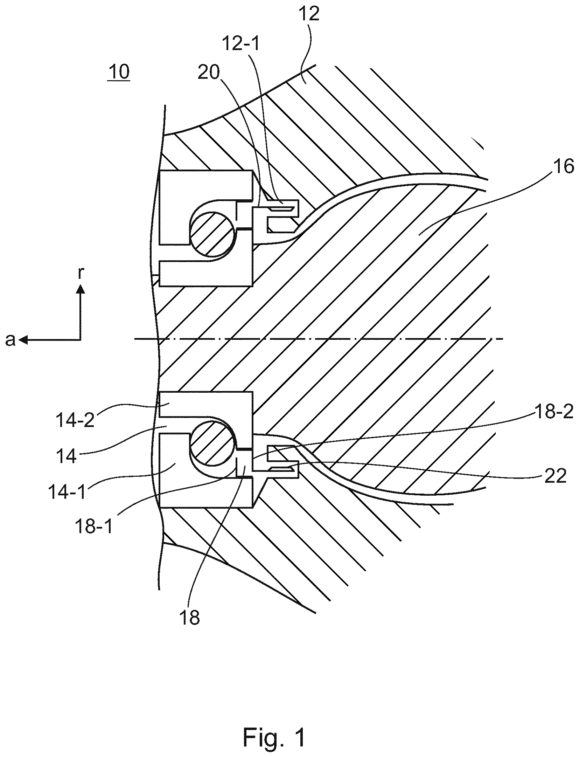

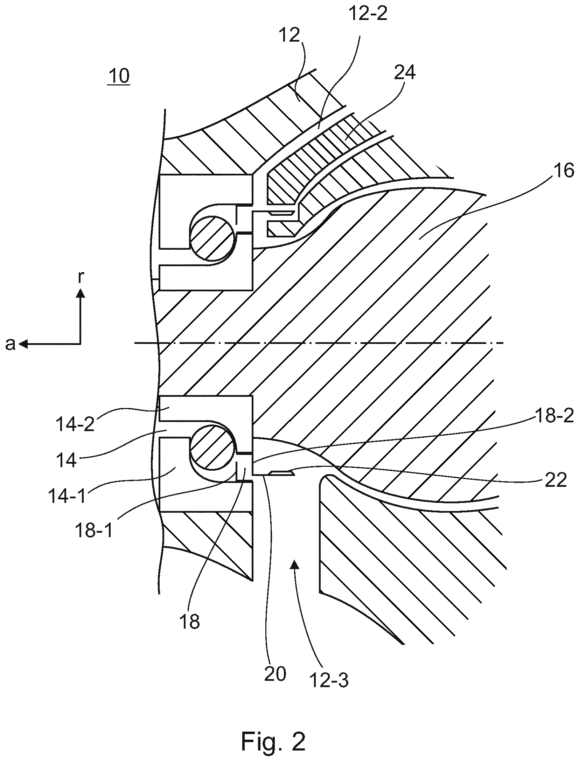

Fig. 1 und Fig. 2 zeigen eine insgesamt mit der Bezugsziffer 10 bezeichnete Radlageranordnung für ein Kraftfahrzeug. In bekannter Art und Weise umfasst die Radlageranordnung 10 ein in einem Radträger 12 gelagertes Wälzlager 14, über das eine - hier nicht dargestellte - Radnabe drehbar in Bezug zum Radträger 12 gelagert ist.

Während der feststehende Lageraußenring 14-1 des Wälzlagers 14 im Radträger 12 gelagert ist, sitzt der rotierende Lagerinnenring 14-2 auf einer Gelenkwelle 16, die ihrerseits drehfest mit der - hier nicht dargestellten - Radnabe verbindbar ist.

Wie Fig. 1 und 2 weiter zu entnehmen ist, ist das Wälzlager 14 radträgerseitig mittels einer Dichtungsanordnung 18 abgedichtet. Die Dichtungsanordnung 18 ist vorliegend in Form einer Kassettendichtung ausgebildet und umfasst ein am stehenden Lageraußenring 14-1 angeordnetes Dichtelement 18-1 sowie ein am rotierenden Lagerinnenring 14-2 angeordnetes Dichtelement 18-2, zwischen denen in bekannter Art und Weise - hier nicht dargestellte - Dichtlippen angeordnet sind.

Wie Fig. 1 weiter zeigt, weist der Radträger 12 axial gegenüberliegend zum Walzlager 14 einen umlaufenden Spalt 12-1 auf. Der Spalt 12-1 ist vorliegend in Form einer in den Radträger 12 eingebrachten umlaufenden Nut ausgebildet. Zudem ist, wie Fig. 1 weiter zu entnehmen ist, an dem in Form einer Schleuderscheibe ausgebildeten zweiten Dichtelement 18-2 ein in axialer Richtung a ausgerichteter, in den Spalt 12-1 hineinreichender Fortsatz 20 ausgebildet.

Durch den Spalt 12-1 im Radträger 12 in Kombination mit dem in den Spalt 12-1 hineinreichenden Fortsatz 20 ist in vorteilhafter Weise ein Labyrinth gebildet, welches in Bezug auf die Kassettendichtung 18 und damit auch in Bezug auf das Wälzlager 12 die Funktion einer Vordichtung übernimmt, so dass aufgrund des verringerten Wasser- und Schmutzeintrags zur Kassettendichtung 18 der Dichtlippenverschleiß reduziert wird und das Wälzlager 14 vor Wasser- und Schmutzeintrag besser geschützt ist.

Zudem umfasst die Radlageranordnung 10 ferner noch einen rotierenden, signalgebenden Encoder 22 sowie einen feststehenden, mit dem Encoder 22 zusammenwirkenden Drehzahlsensor 24. Dabei ist - wie Fig. 1 und 2 zeigen - der Encoder 22 an dem in den Spalt 12-1 hineinreichenden Fortsatz 20 angeordnet, während der Drehzahlsensor 24 in einer in den Spalt 12-1 hineinreichenden Bohrung 12-2 des Radträgers 12 angeordnet ist, vgl. Fig. 2, so dass eine in den Spalt 12-1 hineinreichende Stirnfläche des Drehzahlsensors 24 dem Encoder 22 radial gegenüberliegend angeordnet ist.

Um Wasser, welches sich durch die Zentrifugalkraft zwischen dem Radträger 12 und dem Fortsatz 20 bildet, gezielt abzuführen, ist radial gegenüberliegend zu der den Drehzahlsensor 24 aufnehmenden Bohrung 12-1 zudem noch eine in den Spalt 12-1 hineinreichende Ablaufbohrung 12-3 in den Radträger 12 eingebracht, siehe Fig. 2.

## Patentansprüche

1. Radlageranordnung (10) für ein Kraftfahrzeug, umfassend ein in einem Radträger (12) angeordnetes Wälzlager (14), über das eine Radnabe in Bezug zum Radträger (12) drehbar gelagert ist, **dadurch gekennzeichnet, dass** der Radträger (12) einen in Form einer in den Radträger (12) eingebrachten Nut ausgebildeten umlaufenden axialen Spalt (12-1) aufweist, und dass am rotierenden Lagerring (14-2) des Wälzlagers (14) ein in den Spalt (12-1) hineinreichender Fortsatz (20) ausgebildet ist.

2. Radlageranordnung nach Anspruch 1 oder 2, **dadurch gekennzeichnet, dass** die Radlageranordnung (10) ferner einen feststehenden Drehzahlsensor (24) und einen dem Drehzahlsensor (24) gegenüberliegend angeordneten, rotierenden signalgebenden Encoder (22) umfasst, wobei der Drehzahlsensor (24) in den Spalt (12-1) hineinreichend angeordnet ist, und wobei der Encoder (22) an dem in den Spalt (12-1) hineinreichenden Fortsatz (20) angeordnet ist.

3. Radlageranordnung nach einem der vorgenannten Ansprüche, **dadurch gekennzeichnet, dass** der Fortsatz (20) ein axial überstehender Absatz einer am rotierenden Lagerring (14-2) des Wälzlagers (14) angeordneten Schleuderscheibe (18-2) ist.

4. Radlageranordnung nach Anspruch 3, **dadurch gekennzeichnet, dass** die Schleuderscheibe (18-2) Bestandteil einer mindestens eine Dichtlippe aufweisenden, zwischen dem rotierenden Lagerring (14-2) und dem stehenden Lagerring (14-1) des Wälzlagers (14) wirksamen Kassettendichtung (18) ist.

5. Radlageranordnung nach einem der Ansprüche 2 bis 4, **dadurch gekennzeichnet, dass** der Drehzahlsensor (24) in einer Bohrung (12-2) des Radträgers (12) angeordnet ist.

6. Radlageranordnung nach einem der vorgenannten Ansprüche, **dadurch gekennzeichnet, dass** in den Radträger (12) eine zum Spalt (12-1) führende Ablaufbohrung (12-3) eingebracht ist.

## Claims

1. Wheel bearing assembly (10) for a motor vehicle, comprising a roller bearing (14) disposed in a hub carrier (12), via which roller bearing a wheel hub is rotationally supported in respect to the hub carrier (12), **characterised in that** the hub carrier (12) has a circumferential axial gap (12-1) formed in the shape of a groove introduced into the hub carrier (12), and that on the rotating bearing ring (14-2) of the roller bearing (14) is formed a projection (20) extending into the gap (12-1).

2. Wheel bearing assembly according to claim 1 or 2, **characterised in that** the wheel bearing assembly (10) comprises furthermore a fixed rotational speed sensor (24) and a rotating, signalling encoder (22) disposed opposite to the rotational speed sensor (24), wherein the rotational speed sensor (24) is disposed extending into the gap (12-1), and wherein the encoder (22) is disposed on the projection (20) extending into the gap (12-1).

3. Wheel bearing assembly according to any of the preceding claims, **characterised in that** the projection (20) is an axially overhanging section of a centrifugal disc (18-2) disposed on the rotating bearing ring (14-2) of the roller bearing (14).

4. Wheel bearing assembly according to claim 3, **characterised in that** the centrifugal disc (18-2) is part of a cassette seal (18) having at least one sealing lip, operating between the rotating bearing ring (14-2) and the stationary bearing ring (14-1) of the roller bearing (14).

5. Wheel bearing assembly according to claims 2 to 4, **characterised in that** the rotational speed sensor (24) is disposed in a bore (12-2) of the hub carrier (12).

6. Wheel bearing assembly according to any of the preceding claims, **characterised in that** an outflow bore (12-3) leading to the gap (12-1) is introduced into the hub carrier (12).

## Revendications

1. Agencement de roulement de roue (10) pour un véhicule automobile, comprenant un palier à roulement (14) agencé dans un support de roue (12) par lequel un moyeu de roue est logé de manière à pouvoir tourner par rapport au support de roue (12), **caractérisé en ce que** le support de roue (12) présente une fente (12-1) axiale tournante réalisée sous la forme d'une rainure introduite dans le support de roue (12), et qu'un prolongement (20) pénétrant dans la fente (12-1) est réalisé sur l'anneau de palier (14-2) rotatif du palier à roulement (14).

2. Agencement de roulement de roue selon la revendication 1 ou 2, **caractérisé en ce que** l'agencement de roulement de roue (10) comporte de plus un capteur de vitesse de rotation (24) fixe et un encodeur (22) d'émission de signaux, rotatif, agencé à l'opposé du capteur de vitesse de rotation (24), dans lequel le capteur de vitesse de rotation (24) est agencé pénétrant dans la fente (12-1), et dans lequel l'encodeur (22) est agencé sur le prolongement (20) pénétrant dans la fente (12-1).

3. Agencement de roulement de roue selon l'une quelconque des revendications précédentes, **caractérisé en ce que** le prolongement (20) est un épaulement dépassant axialement d'un disque centrifuge (18-2) agencé sur l'anneau de palier (14-2) rotatif du palier à roulement (14).

4. Agencement de roulement de roue selon la revendication 3, **caractérisé en ce que** le disque centrifuge (18-2) est un constituant d'une garniture de cassette (18) agissant entre l'anneau de palier (14-2) rotatif et l'anneau de palier (14-1) fixe du palier à roulement (14), présentant au moins une lèvre d'étanchéité.

5. Agencement de roulement de roue selon l'une quelconque des revendications 2 à 4, **caractérisé en ce que** le capteur de vitesse de rotation (24) est agencé dans un perçage (12-2) du support de roue (12).

6. Agencement de roulement de roue selon l'une quelconque des revendications précédentes, **caractérisé en ce qu'**un perçage d'évacuation (12-3) menant à la fente (12-1) est introduit dans le support de roue (12).
